# EUROPÄISCHE PATENTSCHRIFT

(11) **EP 1 243 790 B1**
(45) Veröffentlichungstag und Bekanntmachung des Hinweises auf die Patenterteilung: **11.05.2005**
(21) Anmeldenummer: 02012133.1
(22) Anmeldetag: 20.06.1998
(51) Int. Cl.: F03D 7/02, F03D 7/04

(54) **Windenenergieanlage**
Wind turbine
Eolienne

(30) Priorität: 25.07.1997 DE 19731918
(43) Veröffentlichungstag der Anmeldung: 25.09.2002
(62) Teilanmeldung aus: 98937523.3
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner

(56) Entgegenhaltungen:
- DE-A- 2 546 884
- GB-A- 2 067 247
- US-A- 4 297 076
- US-A- 4 339 666
- US-A- 4 348 155
- US-A- 4 355 955
- US-A- 4 550 259

## Beschreibung

Die Erfindung betrifft eine Windenergieanlage mit einem Rotor mit mindestens einem Rotorblatt zur Umwandlung der Strömungsenergie des Windes in mechanische Energie, mit einer Verstellvorrichtung zur individuellen Verstellung mindestens eines Rotorblattes, mit einem Generator zur Umwandlung der mechanischen Energie des Rotors in elektrische Energie und mit einer Wirkverbindung zwischen dem Rotor und dem Generator zur Übertragung der mechanischen Energie des Rotors auf den Generator.

Derartige Windenergieanlagen gehören zum Stand der Technik. So zeigt z.B. das deutsche Fachbuch "Windkraftanlagen" von Erich Hau, Springer-Verlag, 2. Aufl., 1996, Seiten 52, 175, 222 bis 242, 269, 320 derartige Windenergieanlagen. Bei diesen bekannten Windenergieanlagen lässt sich mit Hilfe einer Rotorblatteinstellwinkelregelung die Rotordrehzahl und die Leistungsabgabe regeln. Darüber hinaus dient die bekannte Rotorblatteinstellwinkelregelung dem Schutz gegen Überdrehzahl des Rotors bei hohen Windgeschwindigkeiten oder bei einem Netzausfall, bei dem das Generatormoment plötzlich wegfällt. In beiden Fällen geht es darum, die Windenergieanlage gegen Zerstörung durch einen zu hoch drehenden Rotor zu schützen.

Dabei gibt es im wesentlichen zwei Wege, mit Hilfe der Blattverstellung eine Reduzierung der Rotordrehzahl herbeizuführen: zum einen lässt sich der Blatteinstellwinkel in Richtung kleinerer aerodynamischer Anstellwinkel reduzieren, um somit die Leistungsaufnahme des Rotors zu reduzieren. Andererseits ist es möglich, durch die Verstellung des Rotorblatteinstellwinkels zu größeren Einstellwinkeln den kritischen aerodynamischen Anstellwinkel, den sogenannten Stall-Zustand zu erreichen. Letztere Möglichkeit bietet den Vorteil der Verstellung auf kürzerem Weg, bringt jedoch den Nachteil mit sich, dass der Strömungsabriss (Stall) mit hohen Belastungen für den Rotor und die gesamte Windenergieanlage verbunden ist. Beiden Einstellmöglichkeiten ist jedoch gemeinsam, dass sie nur eine mittlere, auf die gesamte Windenergieanlage einwirkende Windgeschwindigkeit bzw. eine bestimmte Grenzrotordrehzahl als Startsignal zur Blattwinkeleinstellung berücksichtigen.

Beide vorgenannten Möglichkeiten des Standes der Technik berücksichtigen nicht, dass es insbesondere bei einem großen Rotordurchmesser zu einer ungleichmäßigen Verteilung der Windverhältnisse über die Rotorfläche kommen kann. Dies hat wiederum unterschiedliche Belastungen auf einzelne Rotorblätter, sowie asymmetrische Belastungen für den Antriebsstrang der Windenergieanlage, d.h. die Nabe, die Antriebswelle und die jeweiligen Lager zur Folge. Derartige unterschiedliche asymmetrische Belastungen treten jedoch nicht nur erst ab einer bestimmten Rotordrehzahl oder einer bestimmten Windgeschwindigkeit auf, sondern finden ständig auch während des normalen Betriebs der Windenergieanlage statt. Die bisher aus dem Stand der Technik bekannte Blattwinkelregelung kann daher nicht auf Windgeschwindigkeitsschwankungen und damit verbundene Lastschwankungen im Rotorbereich reagieren, da bei den bekannten Anlagen eine einheitliche, synchrone Verstellung der Rotorblätter stattfindet:

Bei vorbekannten Anlagen (siehe insbesondere S. 238 des oben genannten Fachbuches oder GB2 067 247 A) ist zwar zum einen eine individuelle elektrische Verstellung jedes einzelnen Rotorblattes vorgeschlagen worden; jedoch findet auch dieser Vorschlag unter der Annahme einer mittleren Windgeschwindigkeit statt, die auf die Windenergieanlage einwirkt. Mit dieser und der weiteren Annahme, dass die Windgeschwindigkeit mit der Höhe zunimmt, wird dann eine feste, umlaufzyklische Korrektur des Rotorblatteinstellwinkels vorgeschlagen, um die Wechsellasten auf der Zunahme der Windgeschwindigkeit mit der Höhe zumindest teilweise ausregeln zu können. Auch bei dieser Rotorblatteinstelltechnik ist es nachteilig, dass der Einstellwinkel der Rotorblätter fest vorgegeben ist und daher nicht auf lokale und vorübergehende Änderungen der Windgeschwindigkeit in einem Teilbereich des Rotors reagieren kann. Auch bei diesem Vorschlag findet daher bei über der Rotorfläche gesehenen lokalen Spitzen in der Windgeschwindigkeit eine asymmetrische und somit lebensdauerverkürzende Belastung der Bestandteile der Windenergieanlage statt.

Aufgabe der Erfindung ist es daher, die oben genannten Probleme zu vermeiden und eine Windenergieanlage zur Verfügung zu stellen, bei der die Belastungen reduziert werden, die aufgrund lokaler und vorübergehender Spitzen in der Windgeschwindigkeit in Teilbereichen der Rotorfläche auftreten können.

Diese Aufgabe wird erfindungsgemäß durch eine Windenergieanlage, wie sie vom Gegenstand des Patentanspruchs 1 definiert ist gelöst.

Durch die erfindungsgemäße Windenergieanlage wird es ermöglicht, mit Hilfe der Verstellvorrichtung zur individuellen Verstellung mindestens eines Rotorblattes die Windenergieanlage auf momentane, nur an einem Teil der Windenergieanlage lokal anliegende Beanspruchungen, von den Messmitteln ermittelt, mit Hilfe der Steuermittel abzustimmen. Somit wird vorteilhaft erreicht, dass lokale Spitzen in der Belastung der Rotorblätter, der Nabe, des Achsantriebs und der verwendeten Lager vermieden werden. Dies hat wiederum zur Folge, dass die Lebensdauer der Windenergieanlage heraufgesetzt bzw. nicht unbewusst verkürzt wird, da asymmetrische und die Lebensdauer verkürzende Beanspruchungen von Teilen der Windenergieanlage weitgehend vermieden werden.

Darüber hinaus ermöglicht es die erfindungsgemäße Windenergieanlage die momentane Verteilung der Windgeschwindigkeiten auf der Rotorfläche optimal auszunützen und daher zu einer erhöhten Leistungsausbeute der Windenergieanlage beizutragen, da alle Rotorblätter immer mit dem gewünschten und somit optimalen Blattwinkel gefahren werden und daher der Wirkungsgrad pro Rotorblatt gegenüber dem Wirkungsgrad der Windenergieanlagen aus dem Stand der Technik ansteigt.

Besonders bevorzugt ist es, dass die Stellung des Rotorblattes oder der Rotorblätter ununterbrochen der momentanen Beanspruchung der Windenergieanlage angepasst wird. Auf diese Art und Weise lässt sich sicherstellen, dass die Windenergieanlage kontinuierlich im optimalen Arbeitsbereich gefahren wird und gleichzeitig vor Belastungsspitzen, ausgelöst durch lokal im Rotorbereich vorhandene Spitzen in der Windgeschwindigkeit, geschützt ist.

Bei einer bevorzugten Ausführungsform der Erfindung ermitteln die Messmittel zur Ermittlung der lokalen Beanspruchung eines Rotorblattes eine am Rotorblatt vorherrschende Windgeschwindigkeit. Zu diesem Zweck weisen die Messmittel bevorzugt ein auf dem Rotorblatt angebrachtes Anemometer auf. Dadurch, dass das Anemometer direkt auf dem Rotorblatt angeordnet ist, ist eine sehr präzise Steuerung der Winkelstellung des Rotorblattes als Reaktion auf eine erhöhte oder niedrigere Windgeschwindigkeit möglich. Denn durch die Messung der Windgeschwindigkeit direkt an dem Ort, an dem auch eine Verstellung der Windenergieanlage stattfindet, nämlich direkt am zu verstellenden Rotorblatt, ist eine schnelle und genaue Anpassung der Rotorblattwinkelstellung an lokale Veränderungen der Windgeschwindigkeit möglich.

Eine weitere bevorzugte Ausführungsform zeichnet sich dadurch aus, dass die Messmittel eine in einem Teilabschnitt des Rotorbereichs vorherrschende mechanische Last ermitteln. Bei dieser Ausführungsform wird durch die direkte Ermittlung der in einem Teilabschnitt des Rotors anliegenden mechanischen Belastung den steuermitteln eine präzise Information gegeben, mit deren Hilfe sie unter Berücksichtigung der vorgegebenen Geometrie-, Last- und/oder Materialdaten eine gewünschte Stellung mindestens eines verstellbaren Rotorblattes ermitteln können.

Besonders vorteilhaft bei dieser Ausführungsform ist es, wenn die Messmittel eine in dem verstellbaren Rotorblatt vorherrschende mechanische Last ermitteln. Denn indem die Last direkt im Rotorblatt ermittelt wird, kann ähnlich wie bei der oben genannten direkten Ermittlung der Windgeschwindigkeit am Rotorblatt, eine sehr präzise Information über das Windstärkenprofil über der Rotorfläche gewonnen werden. Mit einer derart genauen Information sind die Steuermittel dann in der Lage, eine besonders genaue Reaktion der Verstellvorrichtung zu steuern, so dass eine vorhandene Lastspitze in einem Teilabschnitt des Rotors sehr schnell abgebaut werden kann.

Eine weitere Ausführungsform der Erfindung mit einer Rotornabe zur Aufnahme der Rotorblätter weist Messmittel auf, die eine in der Rotornabe vorhandene mechanische Last messen. Auch bei dieser Ausführungsform lässt sich eine schnelle Anpassung der Rotorblätter an die veränderte Lastsituation vornehmen. Gleiches gilt für Ausführungsformen mit einem Achszapfen zur Lagerung des Rotors, bei dem die Messmittel eine in dem Achszapfen vorherrschende Last ermitteln und bei einer Windenergieanlage mit einer Antriebswelle, die Rotor und Generator unmittelbar oder über ein Getriebe miteinander verbindet, bei der die Messmittel eine in der Antriebswelle oder in den Lagern der Antriebswelle oder des Achszapfens vorherrschende Last ermitteln. Alle vorgenannten Ausführungsformen ermöglichen eine genaue Bestimmung der lokalen Lastverhältnisse im Rotorbereich und somit eine genaue Steuerung der Verstellvorrichtung mittels der Steuermittel. Dabei ist es besonders bevorzugt, dass die Messmittel zur Messung der mechanischen Last Dehnungsstreifen aufweisen, die an den jeweiligen belasteten Teilen der Windenergieanlage angebracht sind. Das heißt, die Dehnungsstreifen können auf dem Rotorblatt, im Innem des Rotorblattes, auf der Rotornabe oder im Innern der Rotomabe, auf dem Achszapfen oder im Innern des Achszapfens, auf der Antriebswelle oder im Innern der Antriebswelle oder an den Lagern angebracht sein. In allen vorgenannten Anbringungsvarianten ist eine einfache Bestimmung der vorhandenen mechanischen Belastung und somit die erfindungsgemäße individuelle Verstellung des Rotorblattes möglich.

Eine weitere bevorzugte Ausführungsform der Erfindung weist Messmittel auf, die einen an dem zu verstellenden Rotorblatt vorherrschenden Anströmwinkel des Windes ermitteln. Dadurch ist es vorteilhaft möglich, auch die Windrichtung des anströmenden Windes relativ zum zu verstellenden Rotorblatt zu bestimmen. Mit Hilfe dieses Messwertes können die Steuermittel auch auf eine in einem Teilbereich des Rotors vorhandene Windrichtungsänderung reagieren.

Insbesondere in Verbindung mit den oben genannten Lastmessmitteln erhalten die Steuermittel ein sehr genaues Bild über die momentanen Windverhältnisse über der Rotorfläche: durch die Lastmessmittel können die Steuermittel eine absolut vorhandene Last berücksichtigten und durch die Messmittel zur Bestimmung des Anströmwinkels kann darüber hinaus auch - unter Berücksichtigung der tatsächlichen Rotorblattstellung - eine genaue Bestimmung der Größe des zu verstellenden Winkels vorgenommen werden. Eine genaue Anpassung bei sich rasch ändemden Windverhältnissen ist somit durch die kombinierte Anwendung von Anströrnwinkelmessung und Lastmessung in den Rotorblättern vorteilhaft sichergestellt. Dabei ist es besonders bevorzugt, die Messung des Anströmwinkels durch eine am Rotorblatt angebrachte Windfahne vorzunehmen.

Eine weitere bevorzugte Ausführungsform der Erfindung zeichnet sich dadurch aus, dass ein Teilabschnitt eines Rotorblattes asynchron zu mindestens einem weiteren verstellbaren Teilabschnitt eines anderen Rotorblattes verstellbar ist. Somit lässt sich insbesondere bei großen Rotordurchmessem der konstruktive Aufwand verringern, indem bevorzugt der äußere Teilabschnitt des Rotorblattes, da sich die Leistungserzeugung des Rotors weitgehend auf den äußeren Blattbereich konzentriert, verstellbar ausgeführt wird.

Bei einer vorteilhaften Ausführungsform der Erfindung lässt sich die für eine bestimmte momentane Beanspruchung gewünschte Stellung des oder der Rotorblätter über mit den Steuermitteln verbundene Eingabemittel vorgeben. Auf diese Art und Weise kann die erfindungsgemäße Windenergieanlage vor Ort nach dem Aufstellen an gegebenenfalls unvorhergesehene Windverhältnisse oder nach einer Reparatur an geänderte Materialstärken oder an geänderte Rotorblattprofile angepasst werden.

Als besonders vorteilhaft hat es sich erwiesen, den Ist-Wert der Rotorblattwinkelstellung von einem Verstellgetriebe abzugreifen, welches zusammen mit einem Verstellmotor die Verstellvorrichtung bildet. Dabei ist es besonders vorteilhaft, wenn die Steuermittel die Verstellung des Rotorblattes praktisch gleichzeitig mit der Erfassung der Messwerte aus den Dehnungsstreifen, dem Anemometer oder der Windfahne nach Abgleich mit dem Ist-Wert des Verstellgetriebes mittels des Verstellmotors vornehmen. Durch eine solche instantane Reaktion auf Belastungsänderungen im Bereich der Rotorblätter ist eine wirksame Vermeidung von schädlichen Belastungen oder einseitigen Belastungen des Rotors gewährleistet.

Ein vorteilhaftes Verfahren zur Anpassung einer Windenergieanlage an nur in einem lokalen Teilabschnitt der Windenergieanlage vorherrschende momentane Beanspruchungen zeichnet sich dadurch aus, dass von Messmitteln die momentane Belastung eines Teils der Windenergieanlage erfasst wird und von Steuermitteln eine für die momentane Beanspruchung gewünschte Stellung mindestens eines der Rotorblätter ermittelt wird und dass entsprechend der Rotorblatt mit Hilfe der Verstellvorrichtung entsprechend verstellt wird, wobei die Verstellvorrichtung und die Messmittel mit den Steuermitteln mit Hilfe von Verbindungsmitteln verbunden sind. Durch dieses einfache Verfahren lässt sich eine wirksame Erhöhung von Lebensdauer und Effizienz der erfindungsgemäßen Windenergieanlage erzielen.

Weitere vorteilhafte Ausführungsformen sind in den Unteransprüchen beschrieben.

Eine Ausführungsform der Erfindung wird nunmehr mit Bezug auf die begleitenden Zeichnungen beschrieben, in denen:
- Figur 1: ein teilweiser Schnitt durch eine erfindungsgemäße Windenergieanlage ist;
- Figur 2: eine Frontalansicht auf eine erfindungsgemäße Windenergieanlage ist; und
- Figur 3: ein Blockschaltbild, welches die Steuerung des verstellbaren Rotorblattes bei einer bevorzugten Ausführungsform der Erfindung darstellt.

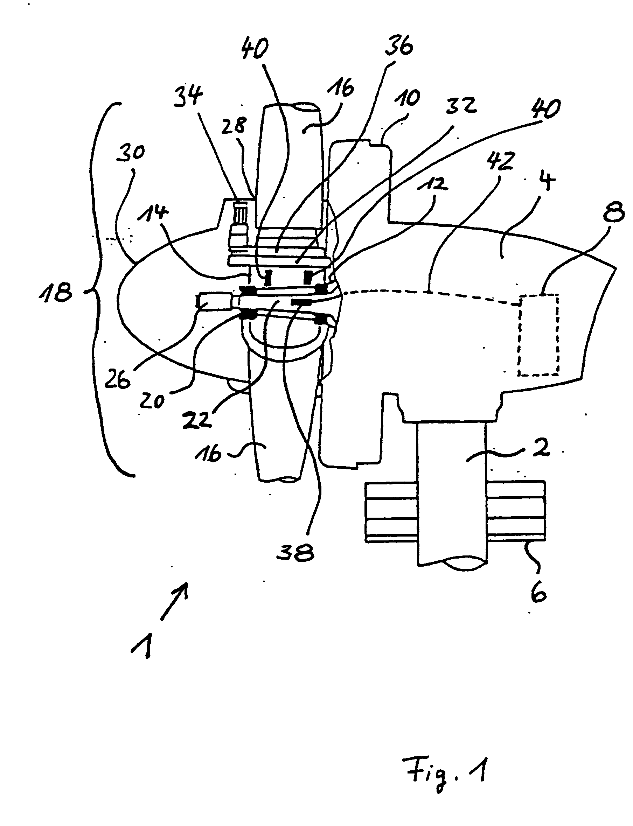

Die Figur 1 zeigt eine Windenergieanlage 1 in einem teilweisen Schnitt. Die Windenergieanlage 1 ruht auf einem (nur teilweise dargestellten) Turm 2. Am oberen Ende des Turmes 2 ist ein Gehäuse 4 auf den Turm aufgesetzt. Unterhalb des Gehäuses 4 liegt eine am Turm angebrachte Wartungsplattform 6. Das Gehäuse 4 weist in seinem (in der Zeichnung geschlossenen, rechts dargestellten) hinteren Teil einen (nicht dargestellten) Generator und ein gestrichelt dargestelltes Steuergerät 8 auf. Der Generator befindet sich hinter einer Auswölbung 10 des Gehäuses 4 und ist über Verbindungselemente 12 mit seinem (nicht dargestellten) Läufer an der Rotomabe 14 angeflanscht. Die Rotornabe 14 und die (nur teilweise dargestellten) Rotorblätter 16 bilden zusammen den Rotor 18. Der Rotor 18 ist mit seiner Rotornabe 14 über Lager 20 auf einem Achszapfen 22 gelagert. Der Achszapfen 22 ragt durch eine in der Rotornabe 14 vorgesehene Öffnung 24 durch die Rotornabe 14 hindurch. Der Achszapfen 22 ist turmseitig innerhalb des Gehäuses 4 mit dem Turm 2 verbunden. Von dem im wesentlichen vertikal aufzustellenden Turm 2 ragt der Achszapfen 22 gegenüber der Horizontalen leicht nach oben gekippt ab. Der Achszapfen 22 ist mit dem (nicht dargestellten) Stator des Generators verbunden und ragt durch den Läufer des Generators und durch die Öffnung 24 der Rotornabe 14 hindurch und wird nach seinem Austritt aus der Öffnung 24 auf der von dem Turm 2 abgewandten Seite des Rotors 18 von einem Abschlussstück 26 abgeschlossen.

Wiederum senkrecht zur Achse des Achszapfens 22 erstrecken sich die Rotorblätter 16 nach außen. Dabei treten die Rotorblätter 16 durch Öffnungen 28 im Vordergehäuse 30 hindurch. Das Vordergehäuse 30 ist beweglich gegenüber dem fest mit dem Turm 2 verbunden Gehäuse 4 und fest mit der Nabe 14 verbunden.

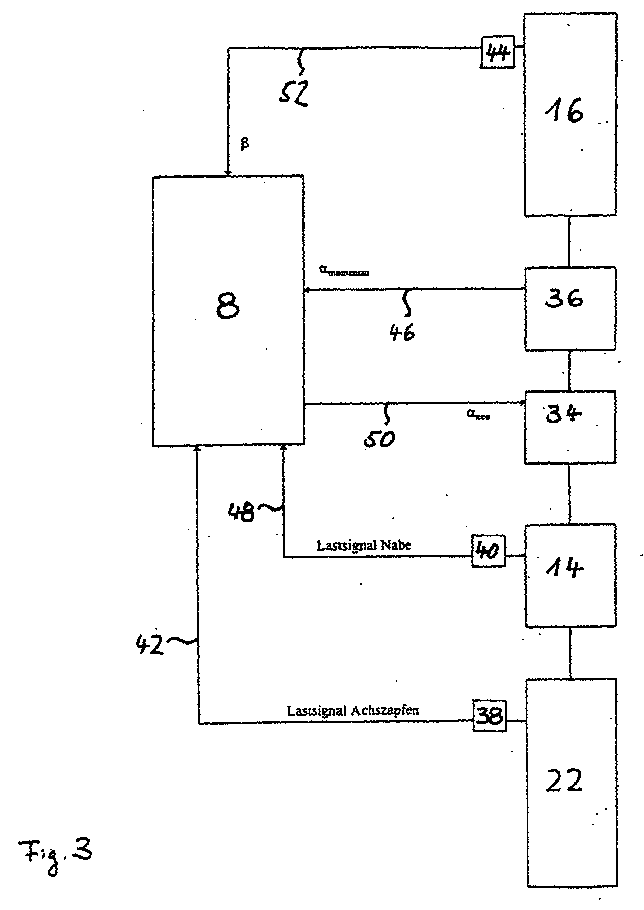

Die Rotorblätter 16 sind über eine Flanschverbindung mit der Rotornabe 14 drehbar um ihre Längsachse verbunden. Ein Verstellmotor 34 ist an der Flanschverbindung 32 angebracht und verstellt über ein Verstellgetriebe 36 das Rotorblatt 16. Der Verstellmotor 34 und das Verstellgetriebe 36 sind über elektrische (in Fig. 3 dargestellte) Verbindungen 50 bzw. 46 mit dem Steuergerät 8 verbunden. Das Vordergehäuse 30 umschließt die Rotomabe 14 mit den Lagern 20, der Flanschverbindung 32, dem Verstellmotor 34 und dem Verstellgetriebe 36 wetterdicht. Das Vordergehäuse 30 weist eine im Querschnitt im wesentlichen halbkugelförmige Form auf.

An dem Achszapfen 22 befinden sich Dehnungsstreifen 38. An der Rotornabe 14 befinden sich Dehnungsstreifen 40. Die Dehnungsstreifen 38 sind über eine elektrische Verbindung 42 mit dem Steuergerät 8 verbunden. Die Dehnungsstreifen 40 sind über eine (in Fig. 3 dargestellte) elektrische Verbindung 48 mit dem Steuergerät 8 verbunden.

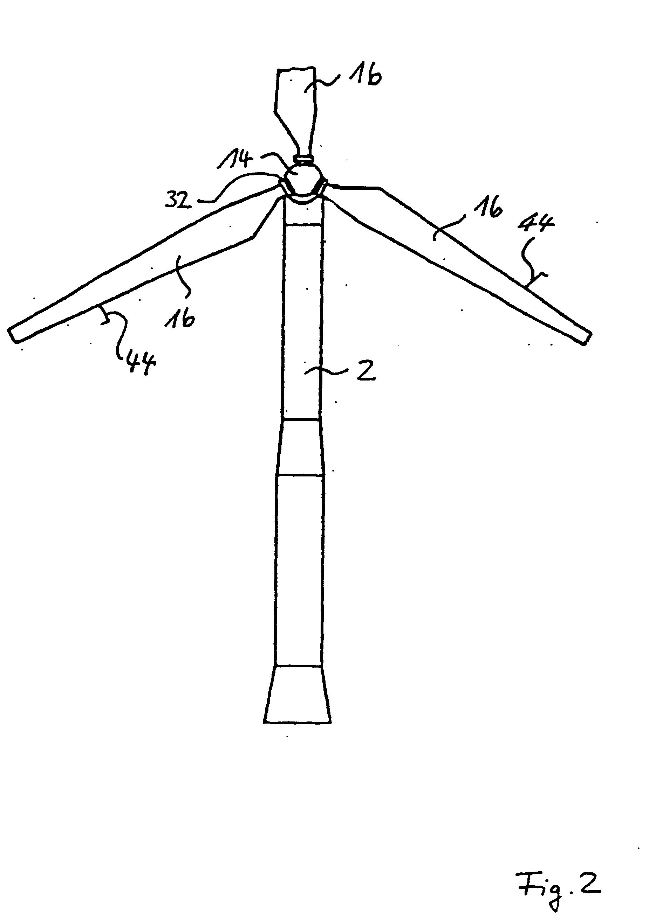

Die Figur 2 zeigt Teile der Windenergieanlage 1 der Figur 1 von der Rotorseite her gesehen. Figur 2 zeigt den Turm 2 mit der an seiner Spitze angebrachten Rotornabe 14. Von der Rotomabe 14 gehen sternförmig drei Rotorblätter 16 aus. Die Rotorblätter 16 sind über die Flanschverbindungen 32 mit der Rotornabe 14 verbunden. Zur Verdeutlichung der Darstellung sind das Vordergehäuse 30, der Verstellmotor 34, das Verstellgetriebe 36, der Achszapfen 22, die Öffnung 24 und das Abschlussstück 26 aus der Fig. 1 nicht dargestellt.

An den Rotorblättern 16 sind Windfahnen 44 zur Messung des Anströmwinkels des auf die Rotorblätter 16 treffenden Windes angebracht. Die Windfahnen 44 sind über (in Fig.3 dargestellte) elektrische Verbindung 52 mit dem Steuergerät 8 (Fig. 1) verbunden.

Anhand des Blockschaltbildes der Figur 3 wird im folgenden die Funktionsweise der erfindungsgemäßen Windenergieanlage beschrieben.

Während des Betriebes der Windenergieanlage 1 rotiert der Rotor 18 um die Achse des Achszapfens 22. Dabei weisen die Rotorblätter 16 eine bestimmte, mit Hilfe des Steuergerätes 8, des Verstellmotors 34 und des Verstellgetriebes 36 vorgegebene Winkelstellung relativ zur Ebene, in der die Rotorblätter 16 rotieren, der Rotorebene auf. Der momentane Winkel αₘₒₘₑₙₜₐₙ der Rotorblätter 16 relativ zur Rotorebene wird dem Steuergerät 8 von dem Verstellgetriebe 16 als Istwert der momentanen Stellung des Rotorblattes 16 über eine elektrische Verbindung 46 übermittelt. Gleichzeitig erhält das Steuergerät 8 von den Dehnungsstreifen 38, die an dem Achszapfen 22 befestigt sind, Messwerte über die momentane Belastung des Achszapfens 22 über die Leitung 42 ("Lastsignal Achszapfen" der Figur 3). Ebenfalls gleichzeitig mit der Übermittlung des momentanen Stellwinkels der Rotorblätter 16 erhält das Steuergerät 8 von den Dehnungsstreifen 40 auf der Rotornabe über die Leitung 48 Messwerte über die aktuelle Belastung der Rotornabe 14 ("Lastsignal Nabe" der Figur 3). Stellt das Steuergerät 8 mit Hilfe der Dehnungsstreifen 38, 40 eine einseitige Belastung des Rotors fest, so gibt das Steuergerät 8 unter Berücksichtigung des momentanen Stellwinkels αₘₒₘₑₙₜₐₙ der Rotorblätter 36 und des momentanen, von der Windfahne 44 ermittelten Anströmwinkels β ein Signal αₙₑᵤ über die Leitung 50 an den Verstellmotor 34 zur Verstellung des entsprechenden Rotorblattes 16 um die Differenz αₙₑᵤ - αₘₒₘₑₙₜₐₙ.

Dadurch dass das Steuergerät 8 kontinuierlich die Messwerte der Dehnungsstreifen 38 und 40 erhält und quasi instantan unter Berücksichtigung des ebenfalls ständig über die Leitung 52 an das Steuergerät 8 übermittelten Anströmwinkels β den Arbeitsbefehl an den Verstellmotor 34 zur Einstellung eines neuen Winkels der Rotorblätter 16 herausgibt, findet on-line mit einer Änderung der Lastverhältnisse im Bereich des Rotors eine Anpassung der Stellung der Rotorblätter 16 statt und somit ein on-line-Ausgleich unsymmetrischer Belastungen des Rotors 18.

Alternativ zu der Messung der momentanen Beanspruchung der Windenergieanlage durch Dehnungsstreifen an Rotornabe und Achszapfen ist auch eine Belastungsmessung direkt an den Rotorblättern durch entsprechende Dehnungsstreifen denkbar.

Abschließend sei festgehalten, dass die verschiedenen Signale (das heißt "Lastsignal Nabe" 40, "Lastsignal Achszapfen" 38, "momentaner Winkel αₘₒₘₑₙₜₐₙ" 46 und "Anströmwinkel β" 53), die zur Ermittlung des idealen Blattwinkels herangezogen werden, entweder gemeinsam oder auch alternativ verwendet werden können.

## Patentansprüche

1. Windenergieanlage (1) mit einem Rotor (18) mit einer Rotomabe (14) mit mindestens zwei um die Längsachse verdrehbaren Rotorblättem (16), mit einer Verstelleinrichtung (34, 36) zur individuellen Verstellung eines Rotorblattes auf einen gewünschten Blatteinstellwinkel und einem Generator, welcher in Wirkverbindung mit dem Rotor steht, wobei eine Antriebswelle vorgesehen ist, die den Rotor (18) und den Generator direkt oder über ein Getriebe verbindet,
**dadurch gekennzeichnet, dass** Messmittel (38, 40, 44) vorgesehen sind, die eine an der Antriebswelle vorherrschende Last ermitteln, dass Steuermittel (8) vorgesehen sind, die eine für die Verringerung der momentanen Belastung gewünschte Blattwinkelstellung mindestens eines Rotorblattes (16) ermitteln und das Rotorblatt (16) mit Hilfe der Verstellvorrichtung (34, 35) unabhängig von der Blattwinkeleinstellung des anderen Rotorblattes oder der anderen Rotorblätter entsprechend auf die gewünschte Blattwinkelstellung verstellen und dass die Verstellvorrichtung (34, 36) und die Messmittel mit dem Steuermittel (8) verbunden sind.

2. Windenergieanlage (1) nach Anspruch 1,
**dadurch gekennzeichnet, dass** die Stellung des Rotorblattes (16) oder der Rotorblätter (16) ständig der momentanen Beanspruchung der Windenergieanlage (1) angepasst wird.

3. Windenergieanlage (1) nach einem der vorstehenden Ansprüche,
**dadurch gekennzeichnet, dass** die Messmittel (38, 40, 44) zur Ermittlung der Beanspruchung des Rotorblattes (16) eine am Rotorblatt (16) vorherrschende Windgeschwindigkeit ermitteln.

4. Windenergieanlage (1) nach Anspruch 3,
**dadurch gekennzeichnet, dass** die Messmittel (38, 40, 44) zur Messung der Windgeschwindigkeit ein Anemometer aufweisen.

5. Windenergieanlage (1) nach Anspruch 4,
**dadurch gekennzeichnet, dass** das Anemometer auf dem Rotorblatt (16) angeordnet ist.

6. Windenergieanlage (1) nach einem der vorstehenden Ansprüche,
**dadurch gekennzeichnet, dass** die Messmittel (38, 40, 44) eine in einem Teilbereich des Rotors (18) vorherrschende mechanische Last ermitteln.

7. Windenergieanlage (1) nach einem der vorstehenden Ansprüche,
**dadurch gekennzeichnet, dass** die Messmittel (38, 40, 44) eine in einem verstellbaren Teilabschnitt des Rotors (18) vorherrschende Last ermitteln.

8. Windenergieanlage (1) nach einem der vorstehenden Ansprüche,
**dadurch gekennzeichnet, dass** die Messmittel (38, 40, 44) eine in dem verstellbaren Rotorblatt (16) vorherrschende Last ermitteln.

9. Windenergieanlage (1) nach einem der vorstehenden Ansprüche, mit einer Rotornabe (14),
**dadurch gekennzeichnet, dass** die Messmittel (38, 40, 44) eine in der Rotornabe (14) vorherrschende Last ermitteln.

10. Windenergieanlage (1) nach einem der vorstehenden Ansprüche, mit einem Achszapfen (22) zur Lagerung des Rotors (18),
**dadurch gekennzeichnet, dass** die Messmittel (38, 40, 44) eine in dem Achszapfen (22) vorherrschende Last ermitteln.

11. Windenergieanlage (1) nach einem der Ansprüche 6 bis 10,
**dadurch gekennzeichnet, dass** die Messmittel (38, 40, 44) zur Messung der Last Dehnungsstreifen (38, 40) aufweisen.

12. Windenergieanlage (1) nach einem der vorstehenden Ansprüche,
**dadurch gekennzeichnet, dass** die Messmittel (38, 40, 44) einen an dem zu verstellenden Rotorblatt (16) vorherrschenden Anströmwinkel des Windes ermitteln.

13. Windenergieanlage (1) nach Anspruch 12,
**dadurch gekennzeichnet, dass** die Messmittel (38, 40, 44) zur Messung des Anströrnwinkels eine an dem Rotorblatt (16) angebrachte Windfahne (44) aufweisen.

14. Windenergieanlage (1) nach einem der vorstehenden Ansprüche, mit mindestens zwei Rotorblättern,
**dadurch gekennzeichnet, dass** mindestens ein Rotorblatt (16) asynchron zu dem oder den anderen verstellbar ist.

15. Windenergieanlage (1) nach einem der vorstehenden Ansprüche,
**dadurch gekennzeichnet, dass** mindestens ein Teilabschnitt mindestens eines Rotorblattes (16) asynchron zu mindestens einem weiteren verstellbaren Teilabschnitt desselben Rotorblattes (16) oder zu dem oder den anderen Rotorblättern (16) oder deren Teilabschnitten verstellbar ist .

16. Windenergieanlage (1) nach einem der vorstehenden Ansprüche,
**dadurch gekennzeichnet, dass** sich die für eine bestimmte momentane Beanspruchung gewünschte Stellung des oder der Rotorblätter (16) über mit den Steuermitteln (8) verbundene Eingabemittel vorgeben läßt.

17. Windenergieanlage (1) nach einem der vorstehenden Ansprüche,
**dadurch gekennzeichnet, dass** die Verstellvorrichtung (34, 36) zur Verstellung des Rotorblattes (16) einen Verstellmotor (34) und ein von diesem angetriebenes Verstellgetriebe (36) aufweist, wobei die Steuermittel (8) von dem Verstellgetriebe (36) einen Istwert über die momentane Stellung des Rotorblattes (16) erhalten und über den Verstellmotor (34) das Rotorblatt (16) verstellen.

18. Windenergieanlage (1) nach Anspruch 17,
**dadurch gekennzeichnet, dass** die Steuermittel (8) die Verstellung des Rotorblattes (16) quasi gleichzeitig mit der Erfassung der Messwerte vornehmen.

19. Windenergieanlage (1) nach einem der vorstehenden Ansprüche,
**dadurch gekennzeichnet; dass** die Windenergieanlage (1) vom Horizontalachsentyp ist.

20. Windenergieanlage (1) nach einem der vorstehenden Ansprüche,
**dadurch gekennzeichnet, dass** der Rotor (18) ein Luvläufer ist.

21. Verfahren zur Anpassung einer Windenergieanlage (1) nach einem der vorstehenden Ansprüche an nur in einem Teilbereich der Windenergieanlage (1) vorherrschende momentane Beanspruchungen,
**dadurch gekennzeichnet, dass** von Messmitteln (38, 40, 44) die momentane Beanspruchung eines Teils der Windenergieanlage (1) ermittelt wird,
von Steuermitteln (8) eine für die momentane Beanspruchung gewünschte Stellung mindestens eines Rotorblattes (16) ermittelt wird und das Rotorblatt (16) mit Hilfe der Verstellvorrichtung (34, 36) entsprechend verstellt wird, wobei die Verstellvorrichtung (34, 36) und die Messmittel (38, 40, 44) mit den Steuermitteln (8) mit Hilfe von Verbindungsmitteln (42, 46, 48, 50, 52) verbunden werden.

## Claims

1. Wind energy plant (1) with a rotor (18) with a rotor hub (14) with at least two rotor blades (16) rotatable about the longitudinal axis, with an adjusting device (34, 36) for individual adjustment of a rotor blade to a desired blade setting angle and a generator, which is in active connection with the rotor, wherein a drive shaft is provided for connecting the rotor (18) and the generator directly or via gears, **characterised in that** measuring means (38, 40, 44) are provided for determining a load prevailing on the drive shaft, **in that** control means (8) are provided, which determine a blade angle position of at least one rotor blade (16) which is desired for reducing the instantaneous loading and, with the aid of the adjusting device (34, 35), adjust the rotor blade (16) according to the desired blade angle position independently of the blade angle setting of the other rotor blade or the other rotor blades, and **in that** the adjusting device (34, 36) and the measuring means are connected to the control means (8).

2. Wind energy plant (1) according to Claim 1, **characterised in that** the position of the rotor blade (16) or rotor blades (16) is constantly adapted to the instantaneous loading of the wind energy plant (1).

3. Wind energy plant (1) according to one of the preceding claims, **characterised in that** the measuring means (38, 40, 44) for determining the loading of the rotor blade (16) determine a wind velocity prevailing on the rotor blade (16).

4. Wind energy plant (1) according to Claim 3, **characterised in that** the measuring means (38, 40, 44) for measuring the wind velocity have an anemometer.

5. Wind energy plant (1) according to Claim 4, **characterised in that** the anemometer is arranged on the rotor blade (16).

6. Wind energy plant (1) according to one of the preceding claims, **characterised in that** the measuring means (38, 40, 44) determine a mechanical load prevailing in a partial area of the rotor (18).

7. Wind energy plant (1) according to one of the preceding claims, **characterised in that** the measuring means (38, 40, 44) determine a load prevailing in an adjustable partial area of the rotor (18).

8. Wind energy plant (1) according to one of the preceding claims, **characterised in that** the measuring means (38, 40, 44) determine a load prevailing in the adjustable rotor blade (16).

9. Wind energy plant (1) according to one of the preceding claims, with a rotor hub (14), **characterised in that** the measuring means (38, 40, 44) determine a load prevailing in the rotor hub (14).

10. Wind energy plant (1) according to one of the preceding claims, with a spindle (22) for bearing the rotor (18), **characterised in that** the measuring means (38, 40, 44) determine a load prevailing in the spindle (22).

11. Wind energy plant (1) according to one of Claims 6 to 10, **characterised in that** the measuring means (38, 40, 44) for measuring the load have wire strain gauges (38, 40).

12. Wind energy plant (1) according to one of the preceding claims, **characterised in that** the measuring means (38, 40, 44) determine a blowing angle of the wind prevailing on the rotor blade (16) to be adjusted.

13. wind energy plant (1) according to Claim 12, **characterised in that** the measuring means (38, 40, 44) for measuring the blowing angle have a wind vane (44) attached to the rotor blade (16).

14. Wind energy plant (1) according to one of the preceding claims, with at least two rotor blades, **characterised in that** at least one rotor blade (16) can be adjusted asynchronously to the other(s).

15. Wind energy plant (1) according to one of the preceding claims, **characterised in that** at least one partial section of at least one rotor blade (16) can be adjusted asynchronously to at least one further adjustable partial section of the same rotor blade (16) or to the other rotor blade(s) (16) or partial sections of them.

16. Wind energy plant (1) according to one of the preceding claims, **characterised in that** the position of the rotor blade(s) (16) desired for a specific instantaneous loading can be preset via input means connected to the control means (8).

17. Wind energy plant (1) according to one of the preceding claims, **characterised in that** the adjusting device (34, 36) for adjusting the rotor blade (16) has an adjusting motor (34) and adjusting gears (36) driven by this, wherein the control means (8) receive from the adjusting gears (36) an actual value on the instantaneous position of the rotor blade (16) and adjust the rotor blade (16) via the adjusting motor (34).

18. Wind energy plant (1) according to Claim 17, **characterised in that** the control means (8) perform the adjustment of the rotor blade (16) quasi simultaneously to the recording of the measured values.

19. Wind energy plant (1) according to one of the preceding claims, **characterised in that** the wind energy plant (1) is of the horizontal axis type.

20. Wind energy plant (1) according to one of the preceding claims, **characterised in that** the rotor (18) is a windward rotor.

21. Method for adapting a wind energy plant (1) according to one of the preceding claims to instantaneous loadings prevailing in only a partial section of the wind energy plant (1), **characterised in that** the instantaneous loading of part of the wind energy plant (1) is determined by measuring means (38, 40, 44), a position of at least one rotor blade (16) which is desired for the instantaneous loading is determined by control means (8) and the rotor blade (16) is adjusted accordingly with the aid of the adjusting device (34, 36), wherein the adjusting device (34, 36) and the measuring means (38, 40, 44) are connected to the control means (8) with the aid of connecting means (42, 46, 48, 50, 52).

## Revendications

1. Installation éolienne (1) pourvue d'un rotor (18) avec un moyeu de rotor (14) présentant au moins deux pales de rotor (16) pouvant tourner autour de l'axe longitudinal, avec un dispositif de réglage (34, 36) pour le réglage individuel d'une pale de rotor selon un angle de réglage souhaité de la pale et un générateur, lequel est en liaison active avec le rotor, un arbre d'entraînement étant prévu, qui relie le rotor (18) et le générateur directement ou par l'intermédiaire d'un engrenage, **caractérisée en ce que** des moyens de détection (38, 40, 44) sont prévus, qui détectent une charge prédominante sur l'arbre d'entraînement, **en ce que** des moyens de commande (8) sont prévus, qui détectent une position angulaire souhaitée de la pale d'au moins une pale de rotor (16) en vue de réduire la charge momentanée et règlent la pale de rotor (16) à l'aide du dispositif de réglage (34, 35) indépendamment de la position angulaire de pale de l'autre pale de rotor ou des autres pales de rotor à la position angulaire souhaitée de la pale et **en ce que** le dispositif de réglage (34, 36) et les moyens de détection sont reliés aux moyens de commande (8).

2. Installation éolienne (1) selon la revendication 1, **caractérisée en ce que** la position de la pale de rotor (16) ou des pales de rotor (16) est adaptée en permanence à la charge momentanée de l'installation éolienne (1).

3. Installation éolienne (1) selon l'une quelconque des revendications précédentes, **caractérisée en ce que** les moyens de détection (38, 40, 44) détectent une vitesse de vent prédominant sur la pale de rotor (16) en vue de déterminer la charge de la pale de rotor (16).

4. Installation éolienne (1) selon la revendication 3, **caractérisée en ce que** les moyens de détection (38, 40, 44) comportent un anémomètre en vue de mesurer la vitesse du vent.

5. Installation éolienne (1) selon la revendication 4, **caractérisée en ce que** l'anémomètre est disposé sur la pale de rotor (16).

6. Installation éolienne (1) selon l'une quelconque des revendications précédentes, **caractérisée en ce que** les moyens de détection (38, 40, 44) détectent une charge mécanique prédominant dans un sous-domaine du rotor (18).

7. Installation éolienne (1) selon l'une quelconque des revendications précédentes, **caractérisée en ce que** les moyens de détection (38, 40, 44) détectent une charge prédominant dans une sous-section du rotor (18) pouvant être réglée.

8. Installation éolienne (1) selon l'une quelconque des revendications précédentes, **caractérisée en ce que** les moyens de détection (38, 40, 44) détectent une charge prédominant dans la pale de rotor (16) pouvant être réglée.

9. Installation éolienne (1) selon l'une quelconque des revendications précédentes, avec un moyeu de rotor (14), **caractérisée en ce que** les moyens de détection (38, 40, 44) détectent une charge prédominant dans le moyeu de rotor (14).

10. Installation éolienne (1) selon l'une quelconque des revendications précédentes, avec un tourillon( 22) en vue de l'installation du rotor (18), **caractérisée en ce que** les moyens de détection (36, 40, 44) détectent une charge prédominant dans le tourillon (22).

11. Installation éolienne (1) selon l'une des revendications 6 à 10, **caractérisée en ce que** les moyens de détection (38, 40, 44) comportent des bandes de dilatation (38, 40) en.vue de mesurer la charge.

12. Installation éolienne (1) selon l'une quelconque des revendications précédentes, **caractérisée en ce que** les moyens de détection (38, 40, 44) détectent un angle de soufflage du vent prédominant sur la pale de rotor (16) devant être réglée.

13. Installation éolienne (1) selon la revendication 12, **caractérisée en ce que** les moyens de détection (38, 40, 44) comportent une pale directrice (44) placée près de la pale de rotor (16) en vue de mesurer l'angle de soufflage.

14. Installation éolienne (1) selon l'une quelconque des revendications précédentes, avec au moins deux pales de rotor, **caractérisée en ce qu'**au moins une pale de rotor (16) peut être réglée de manière asynchrone par rapport à l'autre ou les autres pale(s) de rotor.

15. Installation éolienne (1) selon l'une quelconque des revendications précédentes, **caractérisée en ce qu'**au moins une sous-section d'au moins une pale de rotor (16) peut être réglée de manière asynchrone par rapport à au moins une autre sous-section réglable de la même pale de rotor (16) ou par rapport à l'autre ou les autres pale(s) de rotor (16) ou les sous-sections de celles-ci.

16. Installation éolienne (1) selon l'une quelconque des revendications précédentes, **caractérisée en ce que** la position souhaitée de la ou des pales de rotor (16) pour une charge momentanée déterminée se laisse indiquer par les moyens d'entrée liés aux moyens de commande (8).

17. Installation éolienne (1) selon l'une quelconque des revendications précédentes, **caractérisée en ce que** le dispositif de réglage (34, 36) comporte, en vue du réglage de la pale de rotor (16), un servomoteur (34) et un mécanisme de réglage (36) entraîné par ledit servomoteur, moyennant quoi, les moyens de commande (8) reçoivent une valeur de consigne du mécanisme de réglage (36) sur la position momentanée de la pale de rotor (16) et règlent la pale de rotor (16) par le servomoteur (34).

18. Installation éolienne (1) selon la revendication 17, **caractérisée en ce que** les moyens de commande (8) effectuent le réglage de la pale de rotor (16) pratiquement en même temps que le calcul des valeurs de détection.

19. Installation éolienne (1) selon l'une quelconque des revendications précédentes, **caractérisée en ce que** l'installation éolienne (1) est du type à axe horizontal.

20. Installation éolienne (1) selon l'une quelconque des revendications précédentes, **caractérisée en ce que** le rotor (18) est un induit aérien.

21. Procédé d'adaptation d'une installation éolienne (1) selon l'une quelconque des revendications précédentes aux sollicitations momentanées prédominant uniquement sans un sous-domaine de l'installation éolienne (1), **caractérisé en ce que** la sollicitation momentanée d'une partie de l'installation éolienne (1) est détectée par les moyens de détection (38, 40, 44), une position souhaitée d'au moins une pale de rotor (16) pour la sollicitation momentanée est détectée par les moyens de commande (8) et la pale de rotor (16) est réglée de manière correspondante à l'aide du dispositif de réglage (34, 36), le dispositif de réglage (34, 36) et les moyens de détection (38, 40, 44) étant reliés aux moyens de commande (8) à l'aide des moyens de liaison (42, 46, 48, 50, 52).
